# EUROPEAN PATENT APPLICATION

(11) **EP 4 296 973 A1**
(43) Date of publication of application: **27.12.2023**
(21) Application number: 23177870.5
(22) Date of filing: 07.06.2023
(51) Int. Cl.: G06V 20/13, G06V 20/17, G06V 20/10, G06F 18/2433, G06V 20/64, G06V 20/56, G06V 10/12, G06V 20/52

(54) **SYSTEM AND METHOD FOR LOCALIZATION OF ANOMALOUS PHENOMENA IN ASSETS**

(30) Priority: 24.06.2022 US 202217848485
(71) Applicant: Sharper Shape Oy, 02200 Espoo (FI)
(72) Inventor: Sainio, Jussi, 02200 Espoo (FI)
(74) Representative: Moosedog Oy

(57) **Abstract**

Disclosed is a system (100, 200) comprising primary camera(s) (102, 204) arranged on vehicle (104, 202) that is employed for surveying real-world environment (106); secondary camera(s) (108, 206) coupled to steering unit(s) (110, 208) that is arranged on vehicle; geolocation sensor (112) that, in operation, detects geographical location and orientation of vehicle; and processor(s) (114) configured to receive primary image(s) captured by primary camera(s); process primary image(s) to detect assess) (P1, P2, P3, P4, X, Y) and location and orientation of asset(s); control steering unit(s) to adjust pose of secondary camera(s) based on location and orientation of asset(s) and geographical location and orientation of vehicle, for enabling secondary camera(s) to capture secondary image(s) of asset(s); receive secondary image(s) captured by secondary camera(s); process secondary image(s) to detect anomalous phenomena in asset(s); and locate anomalous phenomena based at least on location and orientation of asset(s).

## Description

### TECHNICAL FIELD

The present disclosure relates to systems for detecting anomalous phenomenon in asset. The present disclosure also relates to methods for detecting anomalous phenomenon in asset. The present disclosure also relates to computer program products for detecting anomalous phenomenon in asset.

### BACKGROUND

With rapid increase of population and wide adoption of various electric appliances, power grid faces plenty of challenges. Hence, the power grid is continually updated with new technologies, such as advancements in monitoring, protection, control and so forth. The power grid also uses grid management techniques for planning, real-time operations, and maintenance of the power grid. In this regard, vehicles (for example, helicopters, drones and the like) are equipped with technology that may be used for aerial surveillance to implement the grid management techniques in an environment. Such kind of aerial surveillance ensures that even minor deviations in the environment are detectable.

The power grid typically suffers from issues such as corona discharges, gas leaks, overheating of equipment, vegetation that may have fallen on wires or are too close to the wires, and so forth. For example, a hybrid system comprising an integrated visible-light camera and ultraviolet camera, coupled with the vehicle, is used to implement the aerial surveillance of the power grid. Herein, the hybrid system is used to detect ultraviolet radiations (for example, corona discharges) emitted by any given equipment in the power grid, that may potentially damage said equipment.

However, it is spatially challenging to analyze and locate the ultraviolet radiations in a two-dimensional or a three-dimensional high-resolution image or a map. Furthermore, the hybrid system fails to recognize other equally potentially damaging issues, that are not related to ultraviolet rad iations.

Therefore, in light of the foregoing discussion, there exists a need to overcome the aforementioned drawbacks in existing techniques employed for maintenance of the power grid.

### SUMMARY

The present disclosure seeks to provide a system for detecting anomalous phenomenon in asset. The present disclosure also seeks to provide a method for detecting anomalous phenomenon in asset. The present disclosure also seeks to provide a computer program product for detecting anomalous phenomenon in asset. An aim of the present disclosure is to provide a solution that overcomes at least partially the problems encountered in prior art.

In a first aspect, the embodiment of the present disclosure provides a system comprising:
at least one primary camera arranged on a vehicle that is employed for surveying a real-world environment;
at least one secondary camera coupled to at least one steering unit that is arranged on the vehicle;
a geolocation sensor that, in operation, detects a geographical location and an orientation of the vehicle; and
at least one processor configured to:
   - receive at least one primary image captured by the at least one primary camera;
   - process the at least one primary image to at least detect at least one asset present in the real-world environment and a location and an orientation of the at least one asset;
   - control the at least one steering unit to adjust a pose of the at least one secondary camera based on the location and the orientation of the at least one asset and the geographical location and the orientation of the vehicle, for enabling the at least one secondary camera to capture at least one secondary image of the at least one asset;
   - receive the at least one secondary image captured by the at least one secondary camera;
   - process the at least one secondary image to at least detect at least one anomalous phenomenon in the at least one asset; and
   - locate the at least one anomalous phenomenon in a representation of the real-world environment based at least on the location and the orientation of the at least one asset.

In a second aspect, the embodiment of the present disclosure provides a method comprising:
- receiving at least one primary image captured by at least one primary camera arranged on a vehicle that is employed for surveying a real-world environment;
- processing the at least one primary image to at least detect at least one asset present in the real-world environment and a location and an orientation of the at least one asset;
- controlling at least one steering unit arranged on the vehicle to adjust a pose of at least one secondary camera that is coupled to the at least one steering unit, based on the location and the orientation of the at least one asset and a geographical location and an orientation of the vehicle, for enabling the at least one secondary camera to capture at least one secondary image of the at least one asset;
- receiving the at least one secondary image captured by the at least one secondary camera;
- processing the at least one secondary image to at least detect at least one anomalous phenomenon in the at least one asset; and
- locating the at least one anomalous phenomenon in a representation of the real-world environment based at least on the location and the orientation of the at least one asset.

In a third aspect, the embodiment of the present disclosure provides a computer program product comprising a non-transitory machine-readable data storage medium having stored thereon program instructions that, when accessed by a processing device, cause the processing device to execute steps according to the second aspect.

Embodiments of the present disclosure substantially eliminate or at least partially address the aforementioned problems in the prior art, and enable detection of anomalous phenomenon in the asset present in real-world environment.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1: is a schematic representation of a system, in accordance with an embodiment of the present disclosure;
- FIGs. 2A, 2B and 2C: collectively show an exemplary system in use, in accordance with an embodiment of the present disclosure; and
- FIG. 3: is an illustration of steps of a method, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the embodiment of the present disclosure provides a system comprising:
at least one primary camera arranged on a vehicle that is employed for surveying a real-world environment;
at least one secondary camera coupled to at least one steering unit that is arranged on the vehicle;
a geolocation sensor that, in operation, detects a geographical location and an orientation of the vehicle; and
at least one processor configured to:
   - receive at least one primary image captured by the at least one primary camera;
   - process the at least one primary image to at least detect at least one asset present in the real-world environment and a location and an orientation of the at least one asset;
   - control the at least one steering unit to adjust a pose of the at least one secondary camera based on the location and the orientation of the at least one asset and the geographical location and the orientation of the vehicle, for enabling the at least one secondary camera to capture at least one secondary image of the at least one asset;
   - receive the at least one secondary image captured by the at least one secondary camera;
   - process the at least one secondary image to at least detect at least one anomalous phenomenon in the at least one asset; and
   - locate the at least one anomalous phenomenon in a representation of the real-world environment based at least on the location and the orientation of the at least one asset.

In a second aspect, the embodiment of the present disclosure provides a method comprising:
- receiving at least one primary image captured by at least one primary camera arranged on a vehicle that is employed for surveying a real-world environment;
- processing the at least one primary image to at least detect at least one asset present in the real-world environment and a location and an orientation of the at least one asset;
- controlling at least one steering unit arranged on the vehicle to adjust a pose of at least one secondary camera that is coupled to the at least one steering unit, based on the location and the orientation of the at least one asset and a geographical location and an orientation of the vehicle, for enabling the at least one secondary camera to capture at least one secondary image of the at least one asset;
- receiving the at least one secondary image captured by the at least one secondary camera;
- processing the at least one secondary image to at least detect at least one anomalous phenomenon in the at least one asset; and
- locating the at least one anomalous phenomenon in a representation of the real-world environment based at least on the location and the orientation of the at least one asset.

In a third aspect, the embodiment of the present disclosure provides a computer program product comprising a non-transitory machine-readable data storage medium having stored thereon program instructions that, when accessed by a processing device, cause the processing device to execute steps according to the second aspect.

The system and method of the present disclosure efficiently spatially analyze anomalous phenomena faced by an asset. Furthermore, the system accurately determines location of the at least one anomalous phenomenon on a high-resolution two-dimensional or three-dimensional representation of the real-world environment. The present disclosure enables detection and localization of ultraviolet radiations, along with other anomalous phenomena, such as dead trees, rust spots on the assets, non-standard material used, missing bolts, broken components and so forth. The present disclosure is able to perform said detection and localization either in real-time, or after a vehicle completes its aerial surveillance of the assets present in the real-world environment. Herein, images captured by the at least one primary camera can be used to decide requirement of the at least one secondary camera at any given moment while the vehicle is conducting the aerial surveillance. As a technical effect, this saves an amount of data that needs to be stored and transferred.

The at least one primary camera may be selected in a manner that it captures images from a wide-angle view. Optionally, the images may be high-quality (i.e., high resolution) images. The at least one primary camera is a visible-light camera or a non-visible light camera. As an example, the at least one primary camera may be implemented as at least one of: a Red-Green-Blue (RGB) camera, a RGB-Depth (RGB-D) camera, a monochrome camera, a thermal (non-visible light) camera. In this regard, the Red-Green-Blue (RGB) camera, the RGB-Depth (RGB-D) camera, the monochrome camera are visible-light cameras. The visible-light camera enables capturing of visible-light images of the real-world environment, wherein the visible-light images are composed using RGB spectrum. The non-visible-light camera detects infrared energy (i.e., heat) and use data collected during detection of said infrared energy to create an image. The at least one primary camera utilizes wavelengths of visible-light ranging from 400 nanometers (nm) up to 800 nm. The wavelength of visible light may lie in a range from 400, 450, 500, 600 or 750 nm up to 500, 650, 750, or 800 nm. The at least one primary camera is rigidly arranged on the vehicle. Optionally, the vehicle can be at least one of: an aerial vehicle, a terrestrial vehicle, a marine vehicle, or a movable sensor system. The term *"movable sensor system"* is used to refer to a sensor that is capable of movement by itself or a sensor system that is arranged on a movable device or a vehicle. For instance, a movable sensor system may comprise a sensor system mounted on a truck, wherein the truck is driven on roads. Examples of the aerial vehicle may include, but is not limited to, a helicopter, a drone, an unmanned aerial vehicle (UAV). Examples of terrestrial vehicle may include, but is not limited to, an automobile, a train, a bus and the like. Examples of marine vehicle may include, but is not limited to, a warship, a container ship, a passenger ship, and the like. The at least one primary camera is employed to survey the real-world environment. Herein, the at least one primary image is collected during said survey, which includes dimensions of a particular area in the real-world environment, further including horizontal distances, directions, angles, and elevations. From the at least one primary image, a software, such as a photogrammetry software can create geo-referenced digital elevation models of the real-world environment.

It will be appreciated that, in case the aerial vehicle is a helicopter, then the helicopter may fly at a height ranging from 60 metres (m) up to at least 500 m, above ground level. The helicopter may fly at a height lying in the range from 60, 100, 150, 250, or 400 m up to at least 100, 250, 350, 450 or 500 m, above ground level. In another case, the aerial vehicle is a drone or an UAV, then the drone or the UAV may fly at a height ranging from 20 m up to at least 500 m, above ground level. The drone or UAV may fly at a height lying in the range from 20, 70, 170, 320, or 470 m up to at least 70, 220, 320, 420 or 500 m, above ground level. In yet another case, the aerial vehicle is a fixed wing aircraft, then the fixed wing aircraft may fly at a height ranging from 500 m up to 1500 m. The fixed wing aircraft may fly at a height lying in the range from 500, 600, 800, 1100, or 1400 m up to 600, 900, 1200, 1400, or 1500 m.

The at least one primary camera may include lenses that offer wide-angle views, wherein the wide angle may range from 20 degrees to 360 degrees. The wide angle may lie in a range from 20, 50, 100, 170, 250, or 340 degrees up to 50, 140, 220, 290, 340, or 360 degrees. The at least one primary camera has a resolution ranging from 0.5 megapixel (MP) to at least 200 MP. The resolution may lie in the range from 0.5, 10, 30, 50, 70, 100 or 140 MP up to 50, 90, 120, 140, 170, 190, or 200 MP. The resolution greater than 200MP are also feasible. The at least one primary camera possesses high-zoom functionality to make a given object appear closer, or further away in a primary image. The at least one primary camera is calibrated in a manner that a given dimension of a single pixel in the primary image captured by the at least one primary camera represents a real-world distance lying in a range of 2 millimetres (mm) to 30 mm. in other words, a calibration factor of the at least one primary camera may lie in a range of 2 mm to 30 mm, per pixel. The calibration factor may range from 2, 5, 10, 15, or 25 mm up to 10, 20, 25, or 30 mm, per pixel. The at least one primary camera may suffer from perspective distortion of the lens, which can be corrected by calibrating the at least one primary camera. Herein, the perspective distortion is caused by position of the at least one primary camera relative to the real-world environment. Furthermore, the at least one primary camera is calibrated using the geolocation sensor i.e., Global navigation satellite system (GNSS)/Inertial measurement unit (IMU) during flight of the aerial vehicle. Additionally, the at least one primary camera suffers from physical misalignments of the IMU with respect to the at least one primary camera. The physical misalignments are represented in form of boresight angles. The boresight angles are rotational parameters i.e., roll, pitch, heading. The boresight angles are calibrated to accurately represent position and orientation of the at least one primary camera.

The at least one secondary camera may include lenses, such as a high zoom lens, that offer narrow angle views, wherein the narrow angle may range from 0 degree to 30 degrees. The narrow angle may lie in a range from 0, 3, 10, or 20 degrees up to 15, 22, 27, or 30 degrees. Hence, field of view (FOV) of the at least one primary camera is higher than a FOV of the at least one secondary camera. The at least one secondary camera captures ultraviolet C (UVC) with wavelengths ranging from 100 nm up to 280 nm. The UVC may lie in a range from 100, 120, 150, 180, 220 or 270 nm up to 150, 200, 240, 270 or 280 nm. Optionally, a resolution of the at least one primary camera is higher than a resolution of the at least one secondary camera. In this regard, the at least one secondary camera has a resolution in the same range as the resolution of the at least one primary camera.

Optionally, the at least one secondary camera is a visible-light camera or a non-visible-light camera. The visible-light camera is implemented as at least one of: a Red-Green-Blue (RGB) camera, a RGB-Depth (RGB-D) camera, a monochrome camera. The non-visible-light camera is implemented as at least one of: an infrared camera, an ultraviolet camera. The infrared camera is a device that captures temperature distributions on surfaces of objects. This is achieved by making thermal radiation of objects or bodies visible, which is otherwise invisible to human eyes. The ultraviolet camera is a device specifically designed to capture secondary images in ultraviolet part of electromagnetic spectrum, which is invisible to human eyes. Optionally, the at least one primary camera may be integrated with the at least one secondary camera. In this regard, the at least one primary camera and the at least one secondary camera are implemented as one of: a multispectral camera, a hyperspectral camera. Resultantly, this will lead to capturing images of UVC and/or thermal radiation of objects or bodies, along with a corresponding image of visible features, to obtain a multispectral image or a hyperspectral image.

Optionally, the at least one steering unit is implemented as a gimbal. The at least one steering unit uses actuators and sensors arranged in a body to implement the gimbal. The gimbal is a pivoted support that permits rotation of the at least one secondary camera about an axis. Herein, a set of three gimbals, one mounted on the other with orthogonal pivot axes, may be used to allow the at least one secondary camera mounted on an innermost gimbal to remain independent of rotation of its pivoted support. Furthermore, the at least one steering unit supports and stabilizes the at least one secondary camera. Herein, stabilizing of the at least one secondary camera coupled to the at least one steering unit is necessary, as the at least one steering unit is arranged on the aerial vehicle. Hence, ideally, the at least one secondary camera would be able to capture at least one secondary images without any distortions. The at least one steering unit is calibrated with respect to (i.e., relative to) the at least one primary camera. The calibration is performed to ensure that the actuators of the at least one steering unit are functioning properly, and there is no restricted movement from the at least one steering unit itself.

Optionally, the system further comprises at least one optical element arranged in front of camera optics (implemented as at least one camera lens) of the at least one secondary camera. Herein, the at least one optical element may be a prism or a mirror system. The prism may be arranged in front of the camera optics to uniquely bend the visible-light, glares, and reflections before entering the camera optics. The mirror system may flip out of path of the visible-light, allowing the visible-light to pass through the camera optics and thereby capturing at least one secondary image.

Optionally, the at least one steering unit is coupled to the at least one optical element and/or the camera optics of the at least one secondary camera, wherein the at least one steering unit is configured to steer optical element and/or the camera optics of the at least secondary camera. Optionally, a steering unit may be coupled to multiple secondary cameras. Optionally, a unit may be formed by coupling a given steering unit to a given secondary camera. There may be several of such units, functioning independently. Optionally, the at least one secondary camera may function independently of the at least one primary camera.

The geolocation sensor is used to detect and monitor the geographical location and the orientation of the vehicle, and allows to potentially control movement of the vehicle. Optionally, the geolocation sensor is implemented as an inertial measurement unit (IMU) and at least one of: a Global Navigation Satellite System (GNSS), a Global Positioning System (GPS). The IMU detects and monitors specific force, angular rate, and orientation of the aerial vehicle. The orientation of the aerial vehicle describes rotation of the aerial vehicle relative to coordinate system of the geolocation sensor.

Throughout the present disclosure, the term *"processor"* refers to relates to a computational element that is operable to respond to and processes instructions that drive the system. The at least one processor is communicably coupled to the at least one primary camera, the at least one secondary camera coupled to the at least one steering unit, and the geolocation sensor. Furthermore, the term *"processor"* may refer to one or more individual processors, processing devices and various elements associated with a processing device that may be shared by other processing devices. Such processors, processing devices and elements may be arranged in various architectures for responding to and executing the steps of the system.

The capturing of the at least one primary image depends on attributes associated with the at least one primary camera. The attributes associated with the at least one primary camera may be, depth of field, motion blur, shutter speed, distortions of lens, resolution, focal length, frames per second (FPS) and so forth. Herein, a pose of the at least one primary camera is set (manually and/or automatically) such that a required view of the real-world environment is captured by the at least one primary camera. In particular, the pose of the at least one primary camera is set or adjusted, by movement of the aerial vehicle, to be such that the at least one asset present in the real-world environment is in a field of view (FOV) of the at least one primary camera, and is thus represented in the at least one primary image. Moreover, the at least one primary image is captured at different instances of time, throughout the flight of the aerial vehicle over the real-world environment.

The at least one asset is detected in the at least one primary image to identify and retrieve (i.e., extract) information about the at least one asset. The at least one processor is configured to detect, classify and track the at least one asset. The information may comprise a type, a location and an orientation of the at least one asset. Examples of the at least one asset may include, but is not limited to, power grid, electric pole, electric tower, gas pipeline, transformers, insulators. The at least one asset also includes overall vegetation present in the real-world environment captured in the at least one primary image by the at least one primary camera. The location and the orientation of the at least one asset together fully describe placement of the at least one asset in the real-world environment. The location of the at least one asset may be a spatial location. The spatial location describes where the at least one asset is physically located, using geospatial coordinates such as latitude and longitude. The location of the asset could be a 2D location (such as latitude and longitude) or a 3D location (such as latitude, longitude, and height/elevation). The orientation of the at least one asset describes specifics of placement of the at least one asset in the real-world environment. More specifically, the orientation is given relative to a frame of reference, usually specified by a Cartesian coordinate system.

Optionally, when processing the at least one primary image to detect the at least one asset present in the real-world environment and the location and the orientation of the at least one asset, the at least one processor employs an object detection model that is pre-trained. The object detection model is a machine learning or a deep learning model, which is used to replicate human ability of analyzing the at least one primary image to recognize and locate the at least one asset in the at least one primary image promptly. A technical effect of using the object detection model that is pre-trained (using reference primary images) is that the object detection model can then accurately detect the location and the orientation of the at least one asset represented in the at least one primary image. Upon training, the object detection model is used to process the at least one primary image. Furthermore, the object detection model localizes the at least one asset by identifying a bounding box surrounding the at least one asset in the at least one primary image. Herein, the bounding box is defined by '*x*' and '*y*' coordinates of its vertices to describe a spatial location of the at least one asset.

Optionally, the at least one processor is further configured to:
- receive reference primary images that are captured by the at least one primary camera during a reference test flight of the aerial vehicle;
- annotating the reference primary images; and
- employing a machine learning algorithm for training the object detection model using the annotated reference primary images.

In this regard, the reference primary images represent one or more real-world environments and assets present in the one or more real-world environments. Herein, the reference primary images are obtained from the at least one primary camera. Optionally, the reference primary images are annotated to record observations about the assets represented in the reference primary images. Herein, annotation is performed to label or classify the reference primary images using text, or a drawing or both, to show features that the object detection model must learn to recognize on its own upon training. The annotation may be either performed manually by a person, or using a computer, wherein the annotation may be performed automatically using the computer or semi-automatically using a combination of the computer and manual input from the person. For example, the one or more real-world environments may comprise an electric pole, overhead wire, and vegetation. Subsequently, reference primary images of the electric pole may be annotated to represent *"Electric* pole", reference primary images of the overhead wire may be annotated to represent *"Overhead wire",* and reference primary images of the vegetation may be annotated to represent *"Vegetation".* Therefore, a training data is constituted by the annotated reference primary images, which is then used to train the object detection model. The machine learning algorithm utilizes the training data as an input for training a given model, to enable the given model in inferring a learning function based on the annotated reference primary images. This learning function is utilized by the given model when the given model is subsequently used after training for processing the at least one primary image. Such machine learning algorithms are well-known in the art.

The at least one processor is configured to control the at least one steering unit by calculating a required amount of steering for the at least one steering unit. The required amount of steering may be along one or more axes. This calculation is sent to the actuators and sensors present in the at least one steering unit. The actuators of the at least one steering unit provides the necessary adjustment of pose (i.e., the required amount of steering) of the at least one secondary camera. When the at least one secondary camera moves, the pose of the at least one secondary camera is described by a rotation and a translation of the at least one secondary camera. The term *"rotation"* is referred to as rotating the at least one secondary camera about a fixed point without changing size or shape of the at least one secondary camera. The term *"translation"* refers to moving the at least one secondary camera without changing the size, the shape or orientation of the at least one secondary camera.

Typically, the aerial vehicle keeps shifting its position with respect to the real-world environment, hence the pose of the at least one steering unit needs to be adjusted continuously. The pose of the at least one secondary camera is adjusted in a manner that the at least one asset lies in the FOV of the at least one secondary camera. The pose of the at least one secondary camera can be expressed in terms of angle(s) of the at least one steering unit with one or more axes, specifically one or more gimbal angles. The at least one asset is detected in the at least one secondary image to identify and retrieve information about the at least one asset. The information may comprise detail features (for example, features representing a deterioration, defects, wearing out, and similar) of the at least one asset in the real-world environment, which are not apparent under visible-light. Herein, the at least one asset reflecting and/or radiating UVC or infrared radiations of UVC wavelength or infrared wavelength is well-captured by the at least one secondary camera.

Optionally, the at least one secondary camera is calibrated against the at least one primary image, using special chessboard targets that has detectable UVC radiation, infrared radiation, or detailed features in the at least one primary image.

Optionally, the at least one primary camera and the at least one secondary camera may be mounted on the aerial vehicle without at least one steering unit. Herein, the aerial vehicle itself is steered to adjust the pose of the at least one secondary camera based on the location and orientation of a given asset and the geographical location of the vehicle. This enables the at least one secondary camera to capture the at least one secondary image of the given asset, after receiving and processing the at least one primary image captured by the at least one primary camera. Herein, the at least one primary image is processed to at detect the given asset present in the real-world environment and the location and the orientation of the given asset.

The at least one secondary image is captured at different instances of time, throughout the movement of the vehicle over the at least one asset present in the real-world environment. The at least one secondary image is captured to get a clear view of the at least one asset and observe any change with respect to the at least one primary image of the at least one asset. The at least one secondary camera is incorporated with a light filter, such as a solar-blind photodetector. The solar-blind photodetector is insensitive to infrared light, visible-light and near UV-light, but respond to UVC radiation whose wavelength lies below 300 nm.

The at least one secondary image is processed to determine UVC radiation or infrared radiation associated with the at least one asset in the at least one secondary image. The at least one secondary image is processed to classify pixels thereof as UVC radiation pixels, infrared radiation pixels or none of them. Optionally, the at least one anomalous phenomenon is at least one of: an ultraviolet burst, an infrared hotspot, high spectral imagery, a structural defect, a leakage. Optionally, the at least one secondary image represents only the at least one anomalous phenomenon in the at least one asset, and does not represent the at least one asset itself.

The at least one anomalous phenomenon is located by determining coordinates of a position thereof with respect to the location and the orientation of the at least one asset. Optionally, a location of the at least one anomalous phenomenon is same as a location of the at least one asset. This is so when the at least one anomalous phenomenon occurs at the location of the at least one asset. Alternatively, optionally, the location of the at least one anomalous phenomenon is offset from the location of the at least one asset. In such a case, the offset is determined by using a calibration factor of the at least one secondary camera and a number of pixels lying between a representation of the at least one asset and a representation of the at least one anomalous phenomenon in the at least one secondary image. Herein, the calibration factor of the at least one secondary camera may be 0.1 mm per pixel, which means one pixel lies between a 0.1 mm of representation of the at least one asset and the representation of the at least one anomalous phenomenon in the at least one secondary image. The geolocation sensor of the aerial vehicle may also help in locating the at least one anomalous phenomenon by using the location of the at least one asset as a reference point along with using the location of the aerial vehicle, when the aerial vehicle lies in vicinity of the at least one asset.

Optionally, when locating the at least one anomalous phenomenon in the representation of the real-world environment, the at least one processor employs edge processing. Herein, the at least one processor is configured to locate the at least one anomalous phenomenon in real-time, instead of collecting the at least one primary image and the at least one secondary image and locating the at least one phenomenon by analyzing the at least one primary image and the at least one secondary image at a data center. A technical effect of this is reduction in latency and bandwidth use. The edge processing may be performed real-time or after completion of surveying the real-world environment by the aerial vehicle.

Optionally, the at least one secondary camera used may be a thermal camera, which is used to capture a secondary image A of a given asset. Herein, the secondary image A comprises pixels representing the at least one anomalous phenomenon, such as a hot spot in any electrical equipment. The hot spot may be detected when a number of pixels in the secondary image A representing the hotspot exceeds a predetermined threshold value. The predetermined threshold value may pertain to any one of: a temperature, a radiation. When, the at least one processor employing edge processing is configured to at least consider a center of mass of the pixels representing the hot spot, a location pertaining to an image plane of the secondary image A may be established.

Optionally, the at least one secondary camera may be optimized to capture light from the ultraviolet part of electromagnetic spectrum. The at least one secondary camera may capture a secondary image B of a given asset. Herein, the secondary image B comprises pixels representing the at least one anomalous phenomenon, such as a UV burst. The UV burst may be detected when a number of pixels in the secondary image B representing the UV burst exceeds a predetermined threshold value. The predetermined threshold value may pertain to any of: a size, an intensity, a duration, a frequency, of the UV burst. Consequently, when the at least one processor employing edge processing is configured to at least consider a center of mass of the pixels representing the UV burst, a location pertaining to an image plane of the secondary image B may be established.

Optionally, the at least one secondary camera include lenses that offer narrow angle views, and may be implemented as one of: the multispectral camera, the hyperspectral camera. The at least one secondary camera captures a secondary image C of a given asset. The secondary image C comprises pixels. The at least one processor employing edge processing, further employs the object detection model that is pre-trained. The object detection model is used to process the secondary image C and detects components, such as insulators, wires, bolts, and the like, and classify them using a classification model that is pre-trained. Herein, the classification model classifies the components as a faulty component in case the component belongs to a given fault class. The component may be classified as a faulty component, in case the component is at least one of: a rusty component, a broken component, a missing component, and the like. The object detection model localizes the component by identifying at least one bounding box surrounding the component in the secondary image C. The at least one processor may be configured to procure a center of mass of the pixels of said bounding box. This establishes classification of the components and the location pertaining to the image plane of the secondary image C may also be established.

Optionally, the representation of the real-world environment is one of: a two-dimensional (2D) representation, a three-dimensional (3D) representation. The real-world environment may be represented in form of a 2D statistical map. The 2D statistical map provides a 2D view of spatial statistics of the real-world environment based at least one the location and the orientation of the at least one asset. The term *"spatial statistics"* refers to statistical values relating to space and spatial relationships. Such spatial statistics may be determined using mathematical computations. The spatial relationships may include, but is not limited to, distance, are, volume, length, height, orientation, centrality and/or other spatial characteristics of the at least one anomalous phenomenon. The 3D representation of geometric data of the real-world environment is stored in a computer for purposes of performing calculations and rendering the 2D representation. The 3D representation may be used for viewing in real-time or later. The 3D representation may include light, shadow, and contextual patterns of the at least one asset in the real-world environment.

Optionally, the at least one anomalous phenomenon is located in the representation of the real-world environment based also on a pre-existing Digital Elevation Model (DEM) of the real-world environment. The pre-existing DEM is modeled using LiDAR data, the geographical location and the orientation of the aerial vehicle, 3D model representing the at least one asset using the point cloud representation. Herein, the DEM is a representation of bare ground topography of the real-world environment excluding trees, infrastructure, and any other surface objects (such as, the at least one asset). The DEM may have a spatial resolution ranging from 20 m up to 30 m. As an example, the spatial resolution of the DEM may be 25 m. The spatial resolution of the DEM may range from 20, 22, 24 or 28 m up to 22, 26, 28 or 30 m. This would improve accuracy of locating the at least one anomalous phenomenon in the representation of the real-world environment.

Optionally, the at least one processor employing edge processing is configured to use the geographical location and the orientation of the vehicle detected by the geolocation sensor, the at least one secondary camera that is calibrated or the at least one optimal element of the at least one secondary camera that is calibrated and the pre-existing DEM of the real-world environment, to detect the location in the image plane and optionally ray cast it through the pre-existing DEM. Beneficially, this helps to determine presence of the faulty component around the geographical location as detected by the geolocation sensor, and pinpoint is better using the ray casted location in the DEM, in case the ray casted location is available.

Optionally, the system further comprises a LiDAR scanner configured to capture LiDAR data of the real-world environment, and wherein the processor is further configured to obtain a point cloud representation of the real-world environment that is generated based on the LiDAR data. The LiDAR scanner may be mounted on the vehicle. An example of the LiDAR scanner may include, but not limited to, a Light Detection and Ranging (LiDAR) camera, and a flash LiDAR camera. The LiDAR scanner comprises a source from where laser (wherein, the laser comprises light pulses) pings off from at least one asset in the real-world environment and returns to the source of the LiDAR scanner, thereby measuring distance by timing travel or flight of light pulse in the laser. The LiDAR data comprises dense and accurate elevation data across landscapes, water bodies, and infrastructure in the real-world environment. Furthermore, the LiDAR data may be collected from stationary and/or mobile platforms. The LiDAR data is processed and organized to generate the point cloud representation. Herein, the point cloud representation generated using LiDAR data are large collections of 3D elevation points, which include 3D coordinates along with additional attributes such as timestamps from the geolocation sensor. The point cloud representation corresponds to the real-world environment, and a set of points in the point cloud representation corresponds to the at least one asset in the real-world environment. It will be appreciated that, based on accurate time determined by the geolocation sensor of the aerial vehicle and the LiDAR data, the LiDAR scanner may be calibrated to manage connections and links between trajectories, imagery and the LiDAR data.

Alternatively, optionally, a photogrammetry system may be used to capture data of the real-world environment, and wherein the at least one processor is further configured to obtain the point cloud representation of the real-world environment that is generated based on the data. The photogrammetry system comprises any one of: an RGB camera, a thermal camera, mounted on the vehicle to capture at least one image of the real-world environment. The photogrammetry system is communicably coupled to the at least one processor, wherein the at least one processor is configured to gather the data about the at least one asset. This data is gathered by analyzing change in position of the at least one asset from at least two different images. The at least two different images are taken from different locations and angles to allow for precise calculations. The at least one processor is configured to use photo interpretation and geometric relationships to gather the data. Consequently, the data gathered is used to at least obtain the point cloud representation. Advantageously, the data can be used to create three-dimensional (3D) models of the real-world environment.

Yet alternatively, optionally, a radar, such as a millimeter wave (mmWave) radar, may be used to capture data of the real-world environment. The radar utilizes a series of a detection algorithm, a clustering algorithm and a tracking algorithm to obtain the point cloud representation or the 3D model. Beneficially, the point cloud representation or the 3D model offers information including location, velocity and trajectory of the at least one asset.

In some implementations, the point cloud representation is generated by an external processor and is accessed by the at least one processor. In this case, the point cloud representation is pre-generated and is simply used by the at least one processor. In other implementations, the at least one processor is further configured to generate the point cloud representation of the real-world environment, based on the LiDAR data. In this implementation, the point cloud representation of the real-world environment is generated on-the-fly, whilst the aerial vehicle flies through the real-world environment.

Optionally, the processor is further configured to generate a three-dimensional (3D) model representing the at least one asset using the point cloud representation, wherein the processor employs a classification model that is pre-trained and a modelling technique for said generation. The 3D model generated using the point cloud representation may carry out detailed analysis, such as, degradation analysis, corona discharge analysis, material analysis and so forth. The point clouds in the point cloud representation needs to be registered and meshed in order to procure the 3D model representing the at least one asset. Herein, when the LiDAR scanner is moved to different positions to capture the real-world environment, the registration is performed by aligning overlapping point clouds. As a technical effect, this generates an accurate 3D model. Thereafter, the meshing converts the point cloud representation into a mesh of triangles or polygons to represent surface of the at least one asset. Herein, the mesh stores data of the location and the orientation of the at least one asset. However, the mesh may be unnecessarily voluminous. Hence, the classification model is used to classify the points in the point cloud representation by computing a set of geometric attributes, as belonging to a given class. The classification model may predict a class or a category for the at least one asset. Herein, the class of the at least one asset in the point cloud representation refers to a category of the at least one asset sharing similar characteristics. The class may be a pre-known class or may be defined by the classification model. Furthermore, the class may be divided into further sub-classes, to improve accuracy of the classification model. Furthermore, the prediction of the class for the at least one asset may be associated with a confidence of such classification. For example, the classification model may be 80% confident that a given asset is classified as a gas pipe.

Optionally, semantic segmentation treats multiple assets of the same class as a single entity. The points in the point cloud representation are assigned a label from a predefined set of classes using semantic segmentation, such as electric pole, transformer, vegetation and so forth. Herein, the label indicates a type of a given asset, such as trees, infrastructure and so forth. In a first approach, each point may be classified individually disregarding the label assigned to the other points in the point cloud representation. In a second approach, each point in the point cloud representation is classified labels according to its neighboring pixels. In a third approach, each point in the point cloud representation is labelled jointly by defining a random class over the points. For example, the point cloud representation may be composed of 1000 points. Subsequently, upon semantic segmentation, 350 points in the point cloud representation may be attributed as the electric pole, 250 points in the point cloud representation may be attributed as the transformer, and 400 points in the point cloud representation may be attributed as the vegetation.

Optionally, when controlling the at least one steering unit to adjust the pose of the at least one secondary camera, the at least one processor is configured to:
- process the point cloud representation to generate a first list indicative of one or more assets which are likely to suffer from the at least one anomalous phenomenon, along with locations and orientations of said assets; and
- generate a control signal for adjusting the pose of the at least one secondary camera, when the geographical location and the orientation of the vehicle lies in proximity of a location and an orientation of an asset belonging to the first list.

In this regard, the point cloud representation may be processed before the aerial vehicle starts surveying the real-world environment, or in real-time whilst the aerial vehicle is surveying the real-world environment.

Herein, as opposed to detecting the at least one phenomenon on each of the at least one asset in the real-world environment, a technical effect of using the first list is that the first list aids to quickly indicate which given asset from the at least one asset will likely show obvious signs of the at least one anomalous phenomenon. When the geolocation sensor of the aerial vehicle detects that the geographical location and the orientation of the aerial vehicle lies in the proximity of the asset belonging in the first list, the control signal indicative of the location and the orientation of said asset is generated. This control signal controls the at least one steering unit to adjust the pose of the at least one secondary camera, for enabling the at least one secondary camera to capture the at least one secondary image. This provides a technical effect of ensuring that assets which are likely to suffer from anomalous phenomena are not skipped out from being imaged by the system. The at least one secondary image is then processed by the at least one processor to detect at least one anomalous phenomenon in the asset. For example, the first list may comprise an overhead wire prone to corona discharges at location A; a transformer prone to heating (indicated as infrared hotspots) at location B and C; power lines encroached by vegetation at locations D, E and F, and so forth. When the aerial vehicle takes flight, the geolocation sensor continuously detects the geographical location and the orientation of the aerial vehicle. In case, when the geographical location and the orientation of the aerial vehicle lies in proximity of the location B, the pose of the at least one secondary camera is adjusted so as to capture the at least one secondary image of the transformer present in location B. The at least one secondary image is processed to detect the at least one anomalous phenomenon.

Optionally, when locating the at least one anomalous phenomenon in the representation of the real-world environment, the at least one processor is configured to perform at least one of:
- compare a given secondary image representing a given phenomenon with the point cloud representation or a 3D model by employing a matching algorithm, for locating the given phenomenon in the point cloud representation or the 3D model;
- map a location of the given phenomenon in the point cloud representation or the 3D model to a corresponding location in a two-dimensional (2D) map representation of the real-world environment; and
- map the locations of the given phenomenon in the point cloud representation or the 3D model and the 2D map representation to a given primary image using 2D-3D backprojection.

In this regard, a technical effect of using the matching algorithm is to improve accuracy of recognition of the given phenomenon in the representation of the real-world environment. The matching algorithm may combine spatial distribution (i.e., location) and geometric attributes (i.e., orientation) of the given phenomenon. The matching algorithm may use Nearest Neighbour (NN) and Nearest Neighbour Distance Ratio (NNDR). Firstly, segmentation is performed based on attributes procured after processing the given secondary image representing a given phenomenon. Secondly, said attributes of the given phenomenon are used to compute characteristics which describe points of the point cloud representation or the 3D model in detail. Several of the given secondary images representing the given phenomenon are used to locate the given phenomenon as they provide multiple views of the given phenomenon. The multiple views convey useful and accurate information of the given phenomenon that corresponds to a set of points in the point cloud representation or the 3D model. Furthermore, the multiple views also convey the pose of the at least one secondary camera relative to the given phenomenon. Herein, information regarding depth and extent of the given phenomenon is determined from a difference in projected locations of the given phenomenon in the multiple views.

The matching algorithm is pre-trained to characterize pixels in the given secondary image with the point cloud representation or the 3D model. It will be appreciated that, the matching algorithm is pre-trained based on well-known methods like denoising, finding contours and so forth. The given secondary image representing the given phenomenon comprises of pixels. Herein, all pixels of the given secondary image are read sequentially, wherein each pixel corresponds to a 2D point (i.e., x and y coordinates). Typically, the given secondary image is completely black (or empty). When the given phenomenon occurs, such as a corona discharge in an overhead wire, there are present intermittent blobs of active pixels at one or more locations (i, j) in the given secondary image. Subsequently, each intermittent blob of active pixels at the one or more locations (i, j) is matched with all x and y coordinates of a set of 2D points. In case, the value of horizontal and vertical axes of each intermittent blob of active pixels matches with all x and y coordinates of a set of 2D points, then corresponding points in the point cloud representation and the 3D model is determined. Herein, the 2D point is matched with all points in the point cloud representation and the 3D model to determine correspondence between the two points. Optionally, the matching algorithm may match the at least one asset in the real-world environment in the point cloud representation or the 3D model.

Optionally, the at least one processor may be configured to process the at least one processor to run the matching algorithm. This may be done to perform real-time information to, for example, a cloud service and send a notification, if necessary. The notification may include location of the given phenomenon in the real-world environment.

Optionally, the intermittent blobs of active pixels may be ray casted for locating the given phenomenon in the point cloud. The matching algorithm may provide geographically accurate ray cast from optical center of the at least one secondary camera through an image plane to detect the at least one asset. Herein, ray casting uses virtual light rays to cast or trace on path of the virtual light rays from the focal point of the at least one secondary camera through each pixel to determine which the at least one asset is visible along the virtual light rays in the 3D model. The virtual light rays hit a portion in the point cloud representation or the 3D model.

Optionally, the 2D map representation may be a 2D statistical map that provide a 2D view of spatial statistics of the real-world environment. The location of the given phenomenon mapped in the point cloud representation or the 3D model to a corresponding location in the 2D map representation are accurate by up to 1 m both vertically and horizontally. A first technical effect of mapping the location of the given phenomenon to a 2D map representation of the real-world environment is to help a user, for example, a maintenance worker, to find the location of the given phenomenon easily. The user may use augmented reality features on a user device or goggles, wherein the user device may be hand-held. A second technical effect of mapping the location of the given phenomenon to the 2D map representation of the real-world environment is that the given phenomenon may be accurately pinpointed on the 2D map representation for cartographic generalization & powerful visualisation.

Subsequently, the locations of the given phenomenon in the point cloud representation or the 3D model and the 2D map representation is mapped to the given primary image using 2D-3D backprojection. The 2D-3D backprojection is a reconstruction method. Herein, the 2D map representation is backprojected into the given primary image to detect the location and orientation of the at least one asset in the 3D representation. A technical effect of the 2D-3D backprojection is that a better co-alignment is procured and improves geometric alignment between the locations of the given phenomenon in the point cloud representation or the or the 3D model and the 2D map representation mapped to the given primary image.

Optionally, the at least one processor employing edge processing is configured to take an input, wherein the input is at least one of: the geographical location and the orientation of the vehicle detected by the geolocation sensor, location and orientation of the at least one steering unit based on the location and the orientation of the at least one asset and the geographical location and the orientation of the vehicle, the at least one secondary camera that is calibrated or the at least one optimal element of the at least one secondary camera that is calibrated, and the LiDAR data of the real-world environment. The LiDAR data may either by pre-collected or captured simultaneously. The LiDAR data is converted to georeferenced point cloud reference or a 3D model. For instance, using the at least one processor employing edge processing, a time-based sliding window of N seconds may be considered of the georeferenced point cloud representation or the 3D model. Subsequently, the object detection model may be used to detect the objects in the real-world environment, such as the at least one asset, poles, wires, components, and the like. Optionally, a pre-existing 3D model of the objects may be previously available.

Optionally, using the geographical location and the orientation of the vehicle as detected by the geolocation sensor and the detected location in the image plane, ray casting to the point cloud representation or the 3D model can be performed. This is performed to determine a precise 3D geographical location of the faulty component in the point cloud representation or the 3D model. Advantageously, the faulty component may be matched potentially with a model and a manufacturer of the faulty component so as to replace the faulty component with a non-faulty component.

Optionally, the at least one processor is further configured to:
- process a given secondary image to also detect an intensity of a given anomalous phenomenon, wherein the intensity depends on at least a number of pixels representing the given anomalous phenomenon in a given secondary image;
- determine whether the intensity of the given anomalous phenomenon exceeds a predefined threshold; and
- send an alert to a utility maintenance system, when it is determined that the intensity of the given anomalous phenomenon exceeds the predefined threshold, wherein the alert is indicative of at least a location of the given anomalous phenomenon.

In this regard, typically, the given secondary image is completely black (or empty). When the given anomalous phenomenon occurs, the pixels in the given secondary image becomes active pixels. A number of these active pixels is directly related to an intensity of the given anomalous phenomenon. Optionally, the intensity of the given anomalous phenomenon depends also on at least one of: a frequency, a temperature, a confidence of classifying a corresponding asset, of the given anomalous phenomenon. Herein, greater the number of pixels representing the given anomalous phenomenon, greater is a size of the given anomalous phenomenon. When the intensity of the given anomalous phenomenon exceeds the predefined threshold, that means the given anomalous phenomenon is a major issue and requires immediate attention. For example, the predefined threshold of temperature while determining intensity of the given anomalous phenomenon may be 120 degrees Celsius. In case, a given secondary image is processed to detect temperature of a given asset, such as a transformer, to be 200 degrees Celsius, the at least one processor determines the intensity of the given anomalous phenomenon of the transformer to exceed the predefined threshold. In such a case, the at least one processor sends the immediate alert to the utility maintenance system. A technical effect of sending an immediate alert to the utility maintenance system is that the utility maintenance system comprising maintenance workers, are directed to the location of the given anomalous phenomenon as indicated by the alert.

Optionally, the utility maintenance system may be automatic. The utility maintenance system is used for a network, wherein the network may be a power grid. The network is divided into a plurality of sub-network, wherein the plurality of sub-network is a set of electrically connected features that are distributed within the network from at least one source to at least one sink. Herein, an immediate alert can activate said utility maintenance system automatically, and select a closest sub-network to the given anomalous phenomenon to be isolated from the network instead of switching off the whole network automatically. The utility maintenance system may be implemented as at least one user device associated with at least one maintenance worker. Examples of the at least one user device may include, but are not limited to, a touch screen television (TV), tablets, laptop computers, personal computers, cellular phones, personal digital assistants (PDAs), handheld devices, etc. The location of the given anomalous phenomenon is roughly determined based on an output of geolocation sensor. The geolocation sensor may have a vertical and/or horizontal accuracy ranging from 20 m to 100 m. The geolocation sensor may have a vertical and/or horizontal accuracy range from 20, 30, 50 or 80 m up to 30, 60, 80, 90 or 100 m.

Optionally, the alert is also indicative of at least one of: the intensity of the anomalous phenomenon, priority of the given anomalous phenomena when multiple anomalous phenomena are taking place wherein the given anomalous phenomena are prioritized according to the intensity to decide which anomalous phenomena (located on a specific asset) requires immediate attention, a type of maintenance activity to be carried out depending on the given anomalous phenomenon and its intensity.

Optionally, the at least one processor is further configured to generate a visualization that represents an area in the real-world environment that is affected by the given anomalous phenomenon, when it is determined that the intensity of the given anomalous phenomenon exceeds the predefined threshold. The visualization may be in the 2D map representation of the real-world environment. Herein, spatial statistics and cartographic generalizations are utilized to represent the area in the real-world environment. When the intensity of the at least one anomalous phenomenon exceeds the predefined threshold in the area, the utility maintenance system is sent the alert which is indicative of at least the location of said area. The visualization that represents said area in the real-world environment is generated as localization in the 2D map representation said is roughly estimated with enough generalizations. Optionally, the visualization on the 2D map may be performed using only one color out of three colors (i.e., red color, green color, or blue color) to save power. For instance, the visualization on the 2D map may be performed using only red color i.e., in RGB display only red color is used, green color and blue color are not used. Optionally, the visualization on the 2D map may include a center point, wherein said center point can be brighter with respect to an area on the 2D map which is not the center point. For instance, a given sub-network comprising at least one anomalous phenomenon is visualized on the 2D map, wherein the given sub-network on the 2D map acts as the center point. The brightness at the center point is the highest, and subsequently decreases from the center point to an edge of a display on the at least one user-device. A technical effect is that, this saves power by providing high brightness only to the center point than by providing equal brightness to the whole visualization on the 2D map.

Optionally, the at least one processor is further configured to attach a metadata to the at least one secondary image, wherein the metadata comprises at least one of: the location and the orientation of the at least one asset, a type of the at least one anomalous phenomenon, an intensity of the at least one anomalous phenomenon, an identification information of the at least one asset. The metadata is attached to the at least one secondary image to show the at least one anomalous phenomenon either for a 2D map representation of the real-world environment, or the point cloud representation, or the 3D model. The metadata summarizes said information of the at least secondary image in order to find and work with particular instances of said information. Furthermore, the metadata may be created manually, or automatically, or a combination of both. Optionally, the metadata is used without the at least one user device i.e., the at least one user device may give sound commands based on at least one factor. Herein, the at least one factor may be: the location of the at least one anomalous phenomenon, a type of the at least one anomalous phenomenon. Hence, the sound commands make it possible to get alerts even when the at least one user device is without any display.

In an embodiment, the location and the orientation of the at least one asset is the location where the at least one anomalous phenomenon has occurred (or, is occurring). Examples of the type of the at least one anomalous phenomenon may include, but is not limited to, corona discharge, infrared hotspot, a structural defect. The intensity of the at least one anomalous phenomenon may depend on at least one of: a frequency, a temperature, a confidence of classifying the at least one asset. The metadata may be used to visualize and classify the at least one anomalous phenomenon according to priority of the at least one anomalous phenomenon. Herein, the priority is decided according to the intensity of the at least one anomalous phenomenon for sending the alert to the utility maintenance system. The identification information of the at least one asset may comprise component ID, a part number, a serial number, name of the at least one asset, logo, design, color, and so forth.

Optionally, wherein the at least one processor is further configured to:
- determine a time period required for adjusting the pose of the at least one secondary camera;
- determine whether a secondary image of a given asset can be captured within said time period if the vehicle continues to fly at its current speed;
- when it is determined that the at least one secondary image cannot be captured by adjusting the pose of the at least one secondary camera if the vehicle continues to fly at its current speed, implement one of:
   - a reduction in the current speed of the vehicle without altering a trajectory of the vehicle, to enable capturing of the secondary image of the given asset within said time period;
   - a change in a trajectory of the vehicle without altering current speed of the vehicle, to enable capturing of the secondary image of the given asset within said time period.

In this regard, the time period is based on properties of the at least one steering unit and required amount of adjustment of pose of the at least one secondary camera. The secondary image of the given asset can be captured within said time period by estimating the pose of the at least one secondary camera within the time period, and by estimating the FOV of the at least one secondary camera at that pose. The reduction in the current speed and the change in the trajectory of the aerial vehicle is implemented so as to capture the at least one secondary image in at least one flight of the aerial vehicle.

For example, the given asset may be isolators P1 and P2 on an electric pole X and isolators P3 and P4 and on an electric pole Y. The aerial vehicle flies in a direction such as the aerial vehicle flies over the electric pole X before flying over the electric pole Y. Ideally, the at least one secondary camera must capture at least one secondary image of the isolators P1 and P2 on the electric pole X and the isolators P3 and P4 on the electric pole Y in a single flight. Furthermore, ideally, the pose of the at least one camera must be adjusted within the time period (t). The at least one secondary camera must capture secondary image of the isolator P1 within time period (t). When the aerial vehicle continues to fly at its current speed (v), the at least one secondary camera should capture the secondary images of the isolators P1 and P2 before capturing the secondary images of the isolators P3 and P4.

In one instance, when the aerial vehicle is at a time point T1, the isolator P1 just enters the FOV of the at least one secondary camera. When the aerial vehicle is at the time point T1 and it flies at its current speed (v) towards a time point T2, the at least one steering unit is controlled to adjust the pose of the at least one secondary camera to capture the secondary image of the isolator P1. If the secondary image of the isolator P1 has not been captured yet and if the at least one steering unit is not able to adjust the pose of the at least one secondary camera within the time period (t) to the isolator P1, the current speed of the aerial vehicle is reduced lower than the current speed (v), within the time period (t). The reduction in the current speed (v) of the aerial vehicle enables the at least one secondary camera to capture at the time point T2 the secondary image of the isolator P1, within said time period (t).

In another instance, when the isolator P1 is almost disappearing from the FOV of the at least one secondary camera, the at least one secondary camera may not be able to capture the secondary image of the isolator P1 at the time point T2 at the current speed (v) of the aerial vehicle. The trajectory of the aerial vehicle is changed without altering the current speed (v) of the aerial vehicle, such as the aerial vehicle flies at a height greater than a current height which the aerial vehicle is currently flying at. This increases the FOV of the at least one secondary camera to include the isolator P1. The at least one secondary camera adjusts the pose and captures the secondary image of the isolator P1, within the time period (t). Herein, the trajectory of the aerial vehicle is changed when the aerial vehicle is at a distance lying in a range of 50 m up to 200 m from a location of the electric pole X. The distance of the aerial vehicle may lie in a range from 50, 70, 100, 130 or 170 m up to 100, 140, 170, 190 or 200 m.

In yet another instance, the aerial vehicle may change its orientation, along with the change in pose of the at least one secondary camera, to capture the secondary image for the isolator P1, within the time period (t). This may be performed at the time of changing the trajectory of the aerial vehicle or independently, when it is observed that the isolator P1 is on a brink of disappearing from the FOV of the at least one secondary camera, and the secondary image of the isolator P1 has not been captured yet. The instances disclosed above may be performed as and when required, for the isolator P2 on the electric pole X, and the isolators P3 and P4 on the electric pole Y, in a single flight of the aerial vehicle.

Optionally, in case the given anomalous phenomenon is not detected properly, then the aerial vehicle may reduce its current speed or decrease the height at which the aerial vehicle is currently flying. This is done to make sure that all assets i.e., isolators, electric poles, etc. are captured successfully and to provide a better picture quality by both the at least one primary camera and the at least one secondary camera.

The present disclosure also relates to the method as described above. Various embodiments and variants disclosed above, with respect to the aforementioned system, apply mutatis mutandis to the method.

Optionally, the step of controlling the at least one steering unit to adjust the pose of the at least one secondary camera comprises:
- processing a point cloud representation to generate a first list indicative of one or more assets which are likely to suffer from the at least one anomalous phenomenon, along with locations and orientations of said assets; and
- generating a control signal for adjusting the pose of the at least one secondary camera, when the geographical location and the orientation of the vehicle lies in proximity of a location and an orientation of an asset belonging to the first list.

Optionally, the step of locating the at least one anomalous phenomenon in the representation of the real-world environment comprises:
- comparing a given secondary image representing a given phenomenon with the point cloud representation or a 3D model by employing a matching algorithm, for locating the given phenomenon in the point cloud representation or the 3D model;
- mapping a location of the given phenomenon in the point cloud representation or the 3D model to a corresponding location in a two-dimensional (2D) map representation of the real-world environment; and
- mapping the locations of the given phenomenon in the point cloud representation or the 3D model and the 2D map representation to a given primary image using 2D- three-dimensional (3D) backprojection.

Optionally, the method further comprises:
- processing a given secondary image to also detect an intensity of a given anomalous phenomenon, wherein the intensity depends on at least a number of pixels representing the given anomalous phenomenon in a given secondary image;
- determining whether the intensity of the given anomalous phenomenon exceeds a predefined threshold; and
- sending an alert to a utility maintenance system, when it is determined that the intensity of the given anomalous phenomenon exceeds the predefined threshold, wherein the alert is indicative of at least a location of the given anomalous phenomenon.

The present disclosure also relates to the computer program product as described above. Various embodiments and variants disclosed above, with respect to the aforementioned method and the aforementioned system, apply *mutatis mutandis* to the computer program product.

The computer program product comprising a non-transitory machine-readable data storage medium having stored thereon program instructions that, when accessed by a processing device, cause the processing device to execute steps of the aforementioned method. The term *"computer program product"* refers to a software product comprising program instructions that are recorded on the non-transitory machine-readable data storage medium, wherein the software product is executable upon a computing hardware for implementing the aforementioned steps of the method.

In an embodiment, the non-transitory machine-readable date storage medium can direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

### DETAILED DESCRIPTION OF THE DRAWINGS

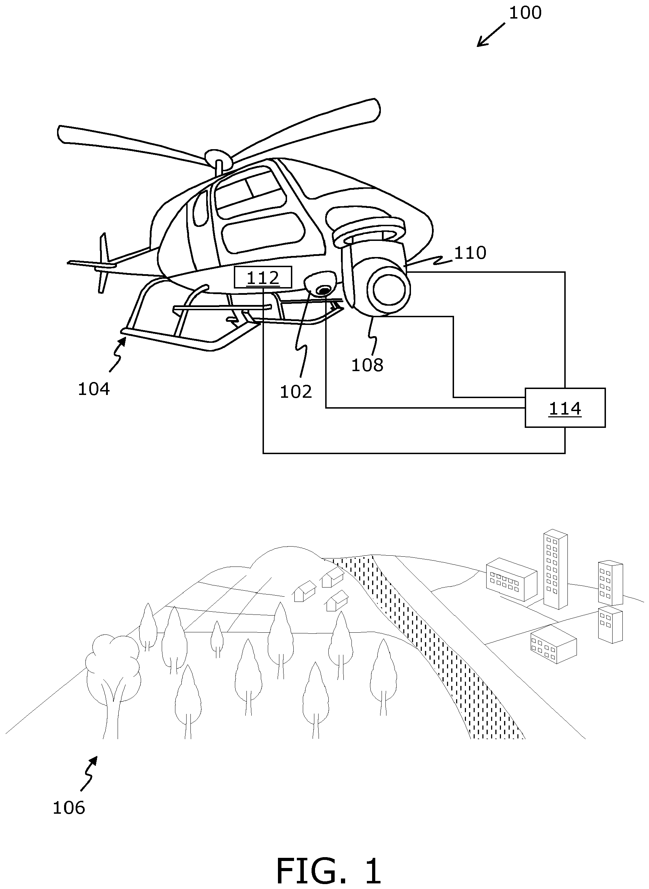

Referring to FIG. 1, there is shown a schematic representation of a system **100,** in accordance with an embodiment of the present disclosure. The system **100** comprises at least one primary camera **102** arranged on a vehicle **104** that is employed for surveying a real-world environment **106.** The system **100** further comprises at least one secondary camera **108** coupled to at least one steering unit **110** that is arranged on the vehicle **104.** The system **100** also comprises a geolocation sensor **112** that, in operation, detects a geographical location and an orientation of the vehicle **104.** At least one processor **114** is communicably coupled with the at least one primary camera **102,** the at least one secondary camera **108,** the at least one steering unit **110,** and the geolocation sensor **112.** The at least one processor **114** could be arranged inside the vehicle **104,** could be outside the vehicle **104** (as shown), or could be arranged partially inside the vehicle **104** and partially outside the vehicle **104.**

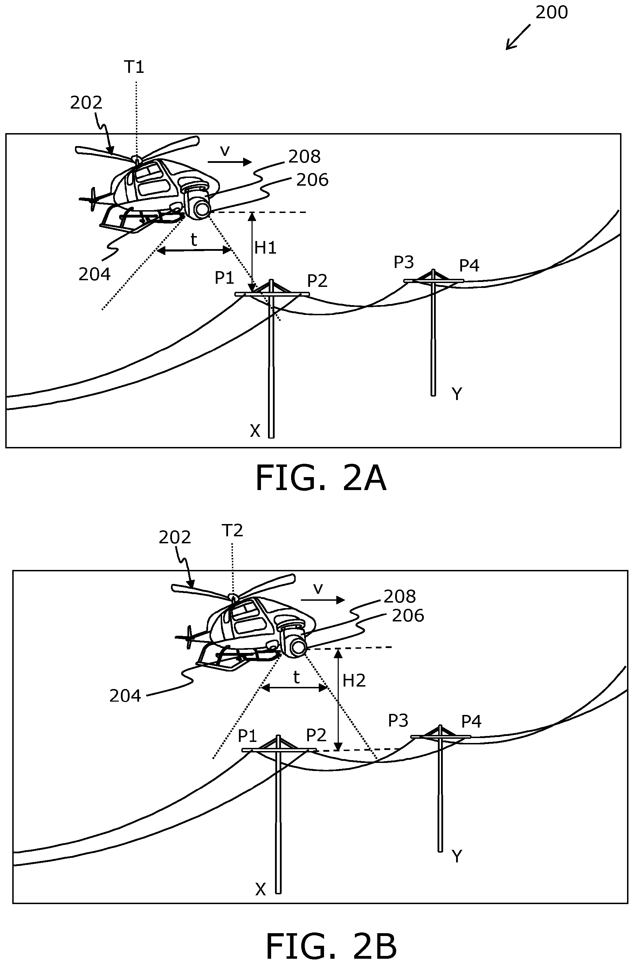

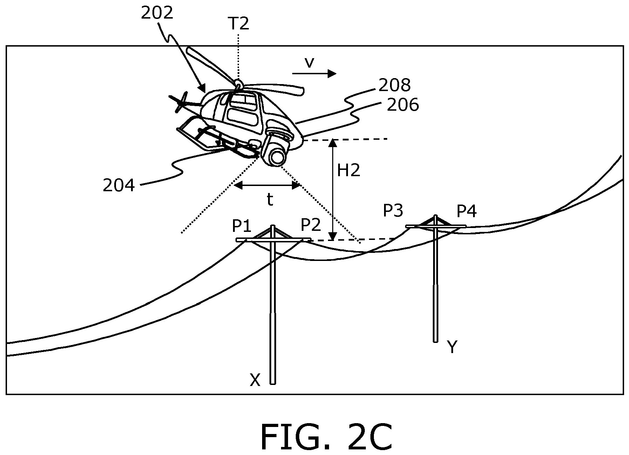

Referring collectively to FIGs. 2A, 2B and 2C, there is shown an exemplary system **200** in use, in accordance with an embodiment of the present disclosure. The exemplary system **200** is used in a real-world environment having at least one asset present therein. The at least one asset may, as shown, be isolators **P1** and **P2** on an electric pole **X,** and isolators **P3** and **P4** and on an electric pole **Y.** The system **200** is, for example, arranged in an aerial vehicle **202.** The aerial vehicle **202** is currently flying at a height **H1.** At least one primary camera **204** of the system **200** is arranged on an aerial vehicle **202.** The at least one primary camera **204** captures at least one primary image. The at least one primary image is processed to detect a location and an orientation of the isolators **P1, P2, P3** and **P4** on the electric poles **X** and **Y,** wherein the location may be expressed as x, y and z coordinates of the isolators **P1, P2, P3** and **P4.** At least one secondary camera **206** of the system **200** is coupled to at least one steering unit **208** that is arranged on the aerial vehicle **202.**

In FIG. 2A, when the aerial vehicle **202** is at a time point **T1,** the isolator **P1** just enters a field of view (FOV) of the at least one secondary camera **206.** When the aerial vehicle **202** is at the time point **T1** and it flies at its current speed **v** towards a time point **T2** (as shown in FIG. 2B), the steering unit **208** is controlled to adjust a pose of the at least one secondary camera **206** based on the x, y and z coordinates of the isolator **P1,** and current geographical location and an orientation of the aerial vehicle **202.** However, if the secondary image of the isolator **P1** has not been captured yet and if the steering unit **208** is not able to adjust the pose of the at least one secondary camera **206** to the isolator **P1** within the time period **t** and before the time point **T2** (as shown in FIG. 2B), the current speed of the aerial vehicle **202** is reduced lower than the current speed **v,** within the time period **t.** The reduction in the current speed of the aerial vehicle **202** without altering a trajectory or an orientation of the aerial vehicle **202,** enables the at least one secondary camera **206** to capture the secondary image of the isolator **P1** within said time period **t.** This is performed for the isolator **P2** on the electric pole **X,** and the isolators **P3** and **P4** on the electric pole **Y,** as and when required.

In FIG. 2B, the aerial vehicle **202** is at the time point **T2.** The at least one secondary camera **206** may not be able to capture the secondary image of the isolator **P1** at the time point **T2** at the current speed **v** of the aerial vehicle **202,** and the isolator **P1** is almost disappearing from the FOV of the at least one secondary camera **206.** Consequently, trajectory of the aerial vehicle **202** is changed without altering the current speed **v** of the aerial vehicle **202,** such as the aerial vehicle **202** is now currently flying at a height **H2,** wherein the height **H2** is higher than the height **H1.** This increases the FOV of the at least one secondary camera **206** to include the isolator **P1.** The pose of at least one secondary camera **206** is adjusted accordingly, thereby enabling the at least one secondary camera **206** to capture the secondary image of the isolator **P1,** within the time period **t.** This is performed for the isolator **P2** on the electric pole **X,** and the isolators **P3** and **P4** on the electric pole **Y,** as and when required.

In FIG. 2C, the aerial vehicle **202** at the time point **T2,** may change its orientation, along with the change in pose of the at least one secondary camera **206.** This may be done at the time of changing the trajectory of the aerial vehicle **202** or independently, when the isolator **P1** is on a brink of disappearing from the FOV of the at least one secondary camera **206.** This enables the at least one secondary camera **206** to capture the at least one secondary image of the isolator **P1.** This is performed for the isolator **P2** on the electric pole **X,** and the isolators **P3** and **P4** on the electric pole **Y,** as and when required.

FIG. 2 is merely an example, which should not unduly limit the scope of the claims herein. A person skilled in the art will recognize many variations, alternatives, and modifications of embodiments of the present disclosure.

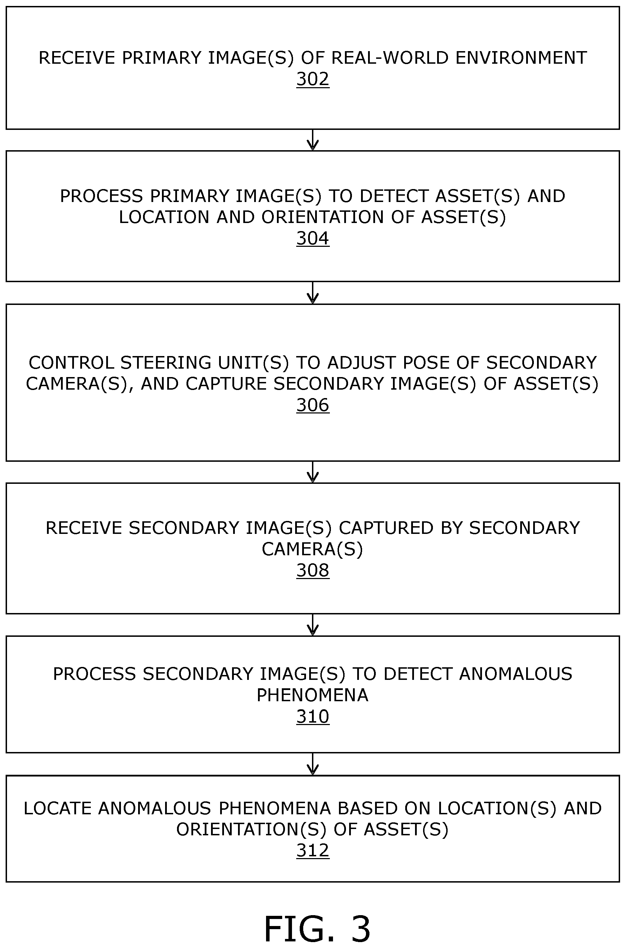

Referring to FIG. 3, illustrated are steps of a method, in accordance with an embodiment of the present disclosure. At step **302,** at least one primary image captured by at least one primary camera is received, wherein the at least one primary camera is arranged on an aerial vehicle that is employed for surveying a real-world environment. At step **304,** the at least one primary image is processed to at least detect at least one asset present in the real-world environment and a location and an orientation of the at least one asset. At step **306,** at least one steering unit arranged on the aerial vehicle is controlled to adjust a pose of at least one secondary camera that is coupled to the at least one steering unit, based on the location and the orientation of the at least one asset and a geographical location and an orientation of the aerial vehicle, for enabling the at least one secondary camera to capture at least one secondary image of the at least one asset. At step **308,** the at least one secondary image captured by the at least one secondary camera is received. At step **310,** the at least one secondary image is processed to at least detect at least one anomalous phenomenon in the at least one asset. At step **312,** the at least one anomalous phenomenon is located in a representation of the real-world environment based at least on the location and the orientation of the at least one asset.

The aforementioned steps are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100, 200) comprising:
at least one primary camera (102, 204) arranged on a vehicle (104, 202) that is employed for surveying a real-world environment (106);
at least one secondary camera (108, 206) coupled to at least one steering unit (110, 208) that is arranged on the vehicle (104, 202);
a geolocation sensor (112) that, in operation, detects a geographical location and an orientation of the vehicle (104, 202); and
at least one processor (114) configured to:
- receive at least one primary image captured by the at least one primary camera (102, 204);
- process the at least one primary image to at least detect at least one asset (P1, P2, P3, P4, X, Y) present in the real-world environment (106) and a location and an orientation of the at least one asset;
- control the at least one steering unit (110, 208) to adjust a pose of the at least one secondary camera (108, 206) based on the location and the orientation of the at least one asset (P1, P2, P3, P4, X, Y) and the geographical location of the vehicle (104, 202), for enabling the at least one secondary camera to capture at least one secondary image of the at least one asset;
- receive the at least one secondary image captured by the at least one secondary camera (108, 206);
- process the at least one secondary image to at least detect at least one anomalous phenomenon in the at least one asset; and
- locate the at least one anomalous phenomenon in a representation of the real-world environment (106) based at least on the location and the orientation of the at least one asset.

2. A system (100, 200) according to claim 1, wherein when processing the at least one primary image to detect the at least one asset (P1, P2, P3, P4, X, Y) present in the real-world environment (106) and the location and the orientation of the at least one asset, the at least one processor (114) employs an object detection model that is pre-trained.

3. A system (100, 200) according to claim 1 or 2, wherein the system further comprises a LiDAR scanner configured to capture LiDAR data of the real-world environment (106), and wherein the processor (114) is further configured to obtain a point cloud representation of the real-world environment that is generated based on the LiDAR data.

4. A system (100, 200) according to claim 3, wherein the processor (114) is further configured to generate a three-dimensional (3D) model representing the at least one asset (P1, P2, P3, P4, X, Y) using the point cloud representation, wherein the at least one processor employs a classification model that is pre-trained and a modelling technique for said generation.

5. A system (100, 200) according to any of claims 3 or 4, wherein when controlling the at least one steering unit (110, 208) to adjust the pose of the at least one secondary camera (108, 206), the at least one processor (114) is configured to:
- process the point cloud representation to generate a first list indicative of one or more assets which are likely to suffer from the at least one anomalous phenomenon, along with locations and orientations of said assets; and
- generate a control signal for adjusting the pose of the at least one secondary camera (108, 206), when the geographical location and the orientation of the vehicle (104, 202) lies in proximity of a location and an orientation of an asset (P1, P2, P3, P4, X, Y) belonging to the first list.

6. A system (100, 200) according to any of claims 3-5, wherein when locating the at least one anomalous phenomenon in the representation of the real-world environment (106), the at least one processor (114) is configured to perform at least one of:
- compare a given secondary image representing a given phenomenon with the point cloud representation or a 3D model by employing a matching algorithm, for locating the given phenomenon in the point cloud representation or the 3D model;
- map a location of the given phenomenon in the point cloud representation or the 3D model to a corresponding location in a two-dimensional (2D) map representation of the real-world environment (106); and
- map the locations of the given phenomenon in the point cloud representation or the 3D model and the 2D map representation to a given primary image using 2D-3D backprojection.

7. A system (100, 200) according to any of the preceding claims, wherein the at least one processor (114) is further configured to:
- process a given secondary image to also detect an intensity of a given anomalous phenomenon, wherein the intensity depends on at least a number of pixels representing the given anomalous phenomenon in a given secondary image;
- determine whether the intensity of the given anomalous phenomenon exceeds a predefined threshold; and
- send an alert to a utility maintenance system, when it is determined that the intensity of the given anomalous phenomenon exceeds the predefined threshold, wherein the alert is indicative of at least a location of the given anomalous phenomenon.

8. A system (100, 200) according to claim 7, wherein the at least one processor (114) is further configured to generate a visualization that represents an area in the real-world environment (106) that is affected by the given anomalous phenomenon, when it is determined that the intensity of the given anomalous phenomenon exceeds the predefined threshold.

9. A system (100, 200) according to any of the preceding claims, the at least one processor (114) further configured to attach a metadata to the at least one secondary image, wherein the metadata comprises at least one of: the location and the orientation of the at least one asset, a type of the at least one anomalous phenomenon, an intensity of the at least one anomalous phenomenon, an identification information of the at least one asset.

10. A system (100, 200) according to any of the preceding claims, wherein the at least one processor (114) is further configured to:
- determine a time period required for adjusting the pose of the at least one secondary camera (108, 206);
- determine whether a secondary image of a given asset can be captured within said time period if the vehicle (104, 202) continues to fly at its current speed;
- when it is determined that the at least one secondary image cannot be captured by adjusting the pose of the at least one secondary camera (108, 206) if the vehicle (104, 202) continues to fly at its current speed, implement one of:
- a reduction in the current speed of the vehicle without altering a trajectory of the vehicle, to enable capturing of the secondary image of the given asset within said time period;
- a change in a trajectory of the vehicle without altering current speed of the vehicle, to enable capturing of the secondary image of the given asset within said time period.

11. A method comprising:
- receiving at least one primary image captured by at least one primary camera (102, 204) arranged on a vehicle (104, 202) that is employed for surveying a real-world environment (106);
- processing the at least one primary image to at least detect at least one asset (P1, P2, P3, P4, X, Y) present in the real-world environment (106) and a location and an orientation of the at least one asset;
- controlling at least one steering unit (110, 208) arranged on the vehicle (104, 202) to adjust a pose of at least one secondary camera (108, 206) that is coupled to the at least one steering unit, based on the location and the orientation of the at least one asset (P1, P2, P3, P4, X, Y) and a geographical location and an orientation of the vehicle, for enabling the at least one secondary camera to capture at least one secondary image of the at least one asset;
- receiving the at least one secondary image captured by the at least one secondary camera (108, 206);
- processing the at least one secondary image to at least detect at least one anomalous phenomenon in the at least one asset; and
- locating the at least one anomalous phenomenon in a representation of the real-world environment (106) based at least on the location and the orientation of the at least one asset.

12. A method according to claim 11, wherein the step of controlling the at least one steering unit (110, 208) to adjust the pose of the at least one secondary camera (108, 206) comprises:
- processing a point cloud representation to generate a first list indicative of one or more assets which are likely to suffer from the at least one anomalous phenomenon, along with locations and orientations of said assets; and
- generating a control signal for adjusting the pose of the at least one secondary camera, when the geographical location and the orientation of the vehicle (104, 202) lies in proximity of a location and an orientation of an asset belonging to the first list.

13. A method according to claim 12, wherein the step of locating the at least one anomalous phenomenon in the representation of the real-world environment (106) comprises:
- comparing a given secondary image representing a given phenomenon with the point cloud representation or a 3D model by employing a matching algorithm, for locating the given phenomenon in the point cloud representation or the 3D model;
- mapping a location of the given phenomenon in the point cloud representation or the 3D model to a corresponding location in a two-dimensional (2D) map representation of the real-world environment; and
- mapping the locations of the given phenomenon in the point cloud representation or the 3D model and the 2D map representation to a given primary image using 2D- three-dimensional (3D) backprojection.

14. A method according to any of the claims 11-13, further comprising:
- processing a given secondary image to also detect an intensity of a given anomalous phenomenon, wherein the intensity depends on at least a number of pixels representing the given anomalous phenomenon in the given secondary image;
- determining whether the intensity of the given anomalous phenomenon exceeds a predefined threshold; and
- sending an alert to a utility maintenance system, when it is determined that the intensity of the given anomalous phenomenon exceeds the predefined threshold, wherein the alert is indicative of at least a location of the given anomalous phenomenon.

15. A computer program product comprising a non-transitory machine-readable data storage medium having stored thereon program instructions that, when accessed by a processing device, cause the processing device to execute steps of a method of any of the claims 11-14.
